(19) Europäisches Patentamt
European Patent Office
Office européen des brevets

(11) **EP 4 336 589 B1**

(12) **EUROPEAN PATENT SPECIFICATION**

(45) Date of publication and mention
of the grant of the patent:
**20.05.2026 Bulletin 2026/21**

(21) Application number: **22899086.7**

(22) Date of filing: **25.11.2022**

(51) International Patent Classification (IPC):
*H01M 4/36* (2006.01)    *H01M 4/48* (2010.01)
*H01M 4/62* (2006.01)    *C01B 33/113* (2006.01)
*H01M 10/052* (2010.01)    *H01M 4/02* (2006.01)
*H01M 4/133* (2010.01)    *H01M 4/587* (2010.01)
*H01M 4/134* (2010.01)

(52) Cooperative Patent Classification (CPC):
**C01B 33/113; H01M 4/133; H01M 4/134;**
**H01M 4/364; H01M 4/366; H01M 4/483;**
**H01M 4/587; H01M 4/62; H01M 4/622;**
**H01M 4/625; H01M 10/052;** Y02E 60/10

(86) International application number:
**PCT/KR2022/018843**

(87) International publication number:
**WO 2023/096404 (01.06.2023 Gazette 2023/22)**

(54) **NEGATIVE ELECTRODE ACTIVE MATERIAL, NEGATIVE ELECTRODE COMPRISING SAME, SECONDARY BATTERY COMPRISING SAME, AND METHOD FOR MANUFACTURING NEGATIVE ELECTRODE ACTIVE MATERIAL**

NEGATIVELEKTRODENAKTIVMATERIAL, NEGATIVELEKTRODE DAMIT, SEKUNDÄRBATTERIE DAMIT UND VERFAHREN ZUR HERSTELLUNG EINES NEGATIVELEKTRODENAKTIVMATERIALS

MATÉRIAU ACTIF D'ÉLECTRODE NÉGATIVE, ÉLECTRODE NÉGATIVE LE COMPRENANT, BATTERIE SECONDAIRE COMPRENANT CETTE ÉLECTRODE ET PROCÉDÉ DE FABRICATION DU MATÉRIAU ACTIF D'ÉLECTRODE NÉGATIVE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.11.2021 KR 20210165308**

(43) Date of publication of application:
**13.03.2024 Bulletin 2024/11**

(73) Proprietor: **LG Energy Solution, Ltd.**
**Seoul 07335 (KR)**

(72) Inventors:
• **OH, Ilgeun**
**Daejeon 34122 (KR)**
• **CHOI, Junghyun**
**Daejeon 34122 (KR)**
• **SHIN, Sun Young**
**Daejeon 34122 (KR)**
• **PARK, Semi**
**Daejeon 34122 (KR)**
• **LEE, Yong Ju**
**Daejeon 34122 (KR)**
• **PARK, Heeyeon**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
WO-A1-2020/262436    WO-A1-2021/236485
JP-A- 2016 091 915    KR-A- 20150 027 236
KR-A- 20210 053 059    KR-A- 20210 107 115

US-A1- 2014 205 907    US-A1- 2021 359 295
US-A1- 2022 246 923

**Description**

[Technical Field]

The present invention relates to a negative electrode active material, a negative electrode including the same, a secondary battery including the same, and a method for preparing the negative electrode active material.

[Background Art]

Recently, with the rapid spread of electronic devices using batteries such as mobile phones, notebook-sized computers, and electric vehicles, the demand for small and lightweight secondary batteries having relatively high capacity is rapidly increasing. In particular, lithium secondary batteries are lightweight and have high energy density, and thus have attracted attention as driving power sources for mobile devices. Accordingly, research and development efforts to improve the performance of lithium secondary batteries have been actively conducted. In general, a lithium secondary battery includes a positive electrode, a negative electrode, a separator interposed between the positive electrode and the negative electrode, an electrolyte, an organic solvent and the like. Further, for the positive electrode and the negative electrode, an active material layer including each of a positive electrode active material and a negative electrode active material may be formed on a current collector. In general, lithium-containing metal oxides such as $LiCoO_2$ and $LiMn_2O_4$ have been used as the positive electrode active material for the positive electrode, and lithium-free carbon-based active materials and silicon-based active materials have been used as the negative electrode active material for the negative electrode.

Among the negative electrode active materials, the silicon-based active material is attracting attention because the silicon-based active material has a high capacity and excellent high-speed charging characteristics compared to the carbon-based active material. However, the silicon-based active material has a disadvantage in that the initial efficiency is low because the degree of volume expansion/contraction due to charging/discharging is large and the irreversible capacity is large.

Meanwhile, among the silicon-based active materials, a silicon-based oxide, specifically, a silicon-based oxide represented by $SiO_x$ (0<x<2) has an advantage in that the degree of volume expansion/contraction due to charging/-discharging is low compared to other silicon-based active materials such as silicon (Si). However, the silicon-based oxide still has a disadvantage in that the initial efficiency is lowered depending on the presence of the irreversible capacity.

In this regard, studies have been continuously conducted to reduce irreversible capacity and improve initial efficiency by doping or intercalating a metal such as Li, Al, and Mg into silicon-based oxides. However, in the case of a negative electrode slurry including a metal-doped silicon-based oxide as a negative electrode active material, there is a problem in that the metal oxide formed by doping the metal reacts with moisture to increase the pH of the negative electrode slurry and change the viscosity thereof, and accordingly, there is a problem in that the state of the prepared negative electrode becomes poor and the charge/discharge efficiency of the negative electrode is reduced.

Accordingly, there is a need for the development of a negative electrode active material capable of improving the phase stability of a negative electrode slurry including a silicon-based oxide and improving the charge/discharge efficiency of a negative electrode prepared therefrom.
Korean Patent No. 10-0794192 relates to a method for preparing a carbon-coated silicon-graphite composite negative electrode material for a lithium secondary battery and a method for preparing a secondary battery including the same, but has a limitation in solving the above-described problems.

WO 2020/262436 A1 provides a negative electrode Si-based active material for secondary batteries comprising core particles obtained by dispersing Si particles in a silicon oxide phase or a silicate phase, and a carbon material that adheres to the surfaces of the core particles.

US 2021/0359295 A1 provides active material composite particles including a core particle including an alkali metal or an alkali earth metal silicate, and a coating disposed on the surface of the core particle.

US 2014/0205907 A1 relates to a silicon-based composite including a silicon oxide which is coated thereon with carbon and bonded therein to lithium.

[Related Art Document]

(Patent Document 1) Korean Patent No. 10-0794192
(Patent Document 2) WO 2020/262436 A1
(Patent Document 3) US 2021/0359295 A1
(Patent Document 4) US 2014/0205907 A1

[Detailed Description of the Invention]

[Technical Problem]

The present invention relates to a negative electrode active material, a negative electrode including the same, a secondary battery including the same and a method for preparing the negative electrode active material.

[Technical Solution]

The present invention provides a negative electrode active material including: silicon-based particles including $SiO_x$ (0<x<2) and Li and having a first carbon layer provided on at least a portion of the surface thereof; and a second carbon layer provided on at least a portion of the silicon-based particle, in which a ratio of D band peak intensity to G band peak intensity (D/G band ratio) is 1.0 or more upon analysis by Raman spectroscopy, and (elemental content of C)/(elemental content of Li + elemental content of C) is 0.6 or more upon analysis by X-ray photoelectron spectroscopy (XPS), and a total content of Li comprised in the negative electrode active material is 5 parts by weight to 10 parts by weight based on total 100 parts by weight of the negative electrode active material.
The present invention provides a method for preparing the negative electrode active material, the method including: forming silicon-based particles including $SiO_x$ (0<x<2) and Li and having a first carbon layer provided on at least a portion of the surface thereof; and forming a second carbon layer on at least a portion of the silicon-based particle.
The present invention provides a negative electrode including the negative electrode active material.
The present invention provides a secondary battery including the negative electrode.

[Advantageous Effects]

A negative electrode including the negative electrode active material according to an exemplary embodiment of the present invention and a secondary battery including the negative electrode have an effect of improving the discharge capacity, initial efficiency, resistance performance and/or service life characteristics of the battery.

[Best Mode]

Hereinafter, the present specification will be described in more detail.
When one part "includes" one constituent element in the present specification, unless otherwise specifically described, this does not mean that another constituent element is excluded, but means that another constituent element may be further included.
When one member is disposed "on" another member in the present specification, this includes not only a case where the one member is brought into contact with another member, but also a case where still another member is present between the two members.
Terms or words used in the specification should not be interpreted as being limited to typical or dictionary meaning and should be interpreted with a meaning and a concept which conform to the technical spirit of the present invention based on the principle that an inventor can appropriately define a concept of a term in order to describe his/her own invention in the best way.
Singular expressions of the terms used in the present specification include plural expressions unless they have definitely opposite meanings in the context.
In the present specification, the crystallinity of a structure included in a negative electrode active material may be confirmed by X-ray diffraction analysis, the X-ray diffraction analysis may be performed using an X-ray diffraction (XRD) analyzer (trade name: D4-endavor, manufacturer: Bruker), and in addition to the analyzer, an apparatus used in the art may be appropriately employed.
In the present specification, the presence or absence of an element and the content of the element in a negative electrode active material can be confirmed by ICP analysis, and the ICP analysis may be performed using an inductively coupled plasma atomic emission spectrometer (ICPAES, Perkin Elmer 7300).
In the present specification, an average particle diameter ($D_{50}$) may be defined as a particle diameter corresponding to 50% of a cumulative volume in a particle size distribution curve (graph curve of the particle size distribution map) of the particles. The average particle diameter ($D_{50}$) may be measured using, for example, a laser diffraction method. The laser diffraction method can generally measure a particle diameter of from submicron region to about several mm, and results with high reproducibility and high resolution may be obtained.
Hereinafter, preferred exemplary embodiments of the present invention will be described in detail. However, the exemplary embodiments of the present invention may be modified into various other forms, and the present invention is as defined in the appended claims but not limited to the exemplary embodiments which will be described below.

**<Negative electrode active material>**

The present invention provides a negative electrode active material including: silicon-based particles including $SiO_x$ (0<x<2) and Li and having a first carbon layer provided on at least a portion of the surface thereof; and a second carbon layer provided on at least a portion of the silicon-based particle, in which a ratio of D band peak intensity to G band peak intensity (D/G band ratio) is 1.0 or more upon analysis by Raman spectroscopy, and (elemental content of C)/(elemental content of Li + elemental content of C) is 0.6 or more upon analysis by X-ray photoelectron spectroscopy (XPS), and a total content of Li comprised in the negative electrode active material is 5 parts by weight to 10 parts by weight based on total 100 parts by weight of the negative electrode active material.

The negative electrode active material according to an exemplary embodiment of the present invention includes silicon-based particles. The silicon-based particles include SiOx (0<x<2) and Li, and may have a first carbon layer provided on at least a portion of the surface thereof.

The $SiO_x$ (0<x<2) corresponds to a matrix in the silicon-based particle. The $SiO_x$ (0<x<2) may be in a form including Si and $SiO_2$, and the Si may also form a phase. That is, the x corresponds to the number ratio of O for Si included in the $SiO_x$ (0<x<2). When the silicon-based particles include the $SiO_x$ (0<x<2), the discharge capacity of a secondary battery may be improved.

In an exemplary embodiment of the present invention, the silicon-based particles may include Li. The Li may be present in the form of at least one of a lithium atom, a lithium silicate, a lithium silicide, and a lithium oxide in the silicon-based particle, and may be present preferably in the form of a lithium silicate. When the Li is present in the form of a Li compound, the Li compound may correspond to a matrix in the silicon-based particle. When the silicon-based particles include a Li compound, there is an effect that the initial efficiency is improved.

The Li may also be in a form in which the silicon-based particles are doped with Li, and may be distributed on the surface and/or inside of the silicon-based particle. The Li compound is distributed on the surface and/or inside of the silicon-based particle, and thus may control the volume expansion/contraction of the silicon-based particles to an appropriate level, and may serve to prevent damage to the active material. Further, the Li may be contained in terms of reducing the ratio of the irreversible phase (for example, $SiO_2$) of the silicon-based oxide particles to increase the efficiency of the active material.

In an exemplary embodiment of the present invention, Li may be present in the form of a lithium silicate. The lithium silicate is represented by $Li_aSi_bO_c$ (2≤a≤4, 0<b≤2, and 2≤c≤5), and may be present in the form of at least one lithium silicate selected from the group including $Li_2SiO_3$, $Li_4SiO_4$ and $Li_2Si_2O_5$ in the silicon-based particle.

In an exemplary embodiment of the present invention, the Li included in the negative electrode active material may be included in an amount of 0.01 parts by weight to 40 parts by weight, 0.01 parts by weight to 20 parts by weight, 0.01 parts by weight to 10 parts by weight or 0.02 parts by weight to 9 parts by weight, based on total 100 parts by weight of the negative electrode active material. Specifically, the Li may be included in an amount of 0.1 parts by weight to 9 parts by weight, 1 parts by weight to 9 parts by weight or 4 parts by weight to 9 part by weight. More specifically, the Li may be included in an amount of 5 parts by weight to 8 parts by weight. There is a problem in that as the content of Li is increased, the initial efficiency is increased, but the discharge capacity is decreased, so that when the content satisfies the above range, appropriate discharge capacity and initial efficiency may be implemented.

The content of the Li element can be confirmed by ICP analysis. Specifically, after a sample (about 0.01 g) is aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of an element to be analyzed using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the contents of the elements of the sample may be analyzed by converting the total sum so as to be the theoretical value.

The silicon-based particles according to an exemplary embodiment of the present invention have a first carbon layer provided on at least a portion of the surface thereof. In this case, the first carbon layer may be in the form of covering at least a portion of the surface, that is, partially covering the surface of the particle, or covering the entire surface of the particle. By the carbon layer, conductivity is imparted to the negative electrode active material, and the initial efficiency, service life characteristics, and battery capacity characteristics of the secondary battery may be improved.

Specifically, the first carbon layer may include crystalline carbon or amorphous carbon.

The crystalline carbon may further improve the conductivity of the negative electrode active material. The crystalline carbon may include at least one selected from the group including fullerene, carbon nanotubes and graphene.

The amorphous carbon may suppress the expansion of the silicon-based particles by appropriately maintaining the strength of the first carbon layer. The amorphous carbon may be a carbide of at least one substance selected from the group including tar, pitch and other organic materials, or may be a carbon-based material formed using a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the first carbon layer may be included in an amount of 1 part by weight to 5 parts by weight, 2 parts by weight to 5 parts by weight, 2 parts by weight to 4.5 parts by weight or 2 parts by weight to 4 parts by weight, based on total 100 parts by weight of the negative electrode active material. More specifically, the first carbon layer may be included in an amount of 3 part by weight to 4 parts by weight. When the above range is satisfied, it is possible to prevent a decrease in the capacity and efficiency of the negative electrode active material.

In an exemplary embodiment of the present invention, the first carbon layer may have a thickness of 1 nm to 500 nm, specifically 5 nm to 300 nm. When the above range is satisfied, the conductivity of the negative electrode active material is improved, the volume change of the negative electrode active material is readily suppressed, and side reactions between an electrolyte solution and the negative electrode active material are suppressed, so that there is an effect that the initial efficiency and/or service life of a battery is/are improved.

Specifically, the first carbon layer may be formed by a chemical vapor deposition (CVD) method using at least one hydrocarbon gas selected from the group including methane, ethane, propane and acetylene.

In an exemplary embodiment of the present invention, the negative electrode active material includes a second carbon layer provided on at least a portion of the silicon-based particle. Specifically, the second carbon layer may be in the form of partially covering the surface of the silicon-based particle, or covering the entire particle surface.

In an exemplary embodiment of the present invention, the negative electrode active material includes a second carbon layer provided on at least a portion of the first carbon layer. Specifically, the second carbon layer may be in the form of partially covering the surface of the first carbon layer, or entirely covering the particle surface.

In general, in the process of doping silicon-based particles with Li, an unreacted lithium by-product is present on the surface of the silicon-based particles, so that there is a problem in that when the slurry is formed, the rheological properties of the slurry are changed because the slurry becomes basic and the lithium by-product reacts with moisture to generate gas.

In the present invention, it is possible to control the side reaction of the unreacted lithium by-product and effectively prevent the slurry from becoming basic by including the Li and additionally covering the second carbon layer on the silicon-based particle covered with the first carbon layer. Furthermore, since the second carbon layer can efficiently passivate the silicon-based particles, there is an effect of improving the water-based processability by preventing the lithium by-product included in the silicon-based particles from being eluted. In addition, since the second carbon layer has hydrophobicity, it is possible to minimize the reaction between the negative electrode active material and water in the water-based slurry.

In an exemplary embodiment of the present invention, a lithium compound may be present between the silicon-based particle and the second carbon layer. In this case, the lithium compound means a lithium by-product formed due to unreacted lithium.

In an exemplary embodiment of the present invention, the lithium compound present between the silicon-based particle and the second carbon layer may be included in an amount of 0.1 parts by weight to 3 parts by weight based on total 100 parts by weight of the negative electrode active material.

In an exemplary embodiment of the present invention, a lithium compound may be present between the first carbon layer and the second carbon layer. In this case, the lithium compound means a lithium by-product formed due to unreacted lithium.

Specifically, in the process of preparing the above-described silicon-based particles by forming the preliminary particles including $SiO_x$ (0<x<2), forming a first carbon layer on the preliminary particles, and then doping the preliminary particles with Li, a lithium compound, that is, a lithium by-product formed by unreacted lithium remains near the surface of the silicon-based particles.

In an exemplary embodiment of the present invention, the lithium compound may include one or more selected from the group including $Li_2O$, LiOH and $Li_2CO_3$.

In an exemplary embodiment of the present invention, a lithium compound may be provided on at least a portion of the surface of the silicon-based particle having the first carbon layer provided.

The lithium compound may be in the form of being located on at least a portion of the surface of the silicon-based particle, that is, being partially located on the surface of the particle, or being located on the entire particle surface.

In an exemplary embodiment of the present invention, the second carbon layer may be provided on at least a portion of the silicon-based particle with the lithium compound provided. Specifically, the second carbon layer may be in the form of partially covering the surface of the particle, or covering the entire particle surface. More specifically, the second carbon layer may be present on at least a portion of the lithium compound provided on the particle surface, or present on at least a portion of a part in which the lithium compound is not provided on the surface of the silicon-based particle.

The second carbon layer may be provided on at least a portion of the lithium compound. That is, the second carbon layer may be in the form of covering at least a portion of the lithium compound, that is, partially covering the surface of the lithium compound, or entirely covering the surface of the lithium compound.

In an exemplary embodiment of the present invention, the second carbon layer includes amorphous carbon. The second carbon layer may further include crystalline carbon.

The crystalline carbon may further improve the conductivity of the negative electrode active material. The crystalline carbon may include at least one selected from the group including fullerene, carbon nanotubes and graphene.

The amorphous carbon may suppress the expansion of the silicon-based particles by appropriately maintaining the strength of the second carbon layer. The amorphous carbon may be a carbide of at least one substance selected from the group including tar, pitch and other organic materials, or may be a carbon-based material formed using a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon of the substituted or unsubstituted aliphatic or alicyclic hydrocarbon may be metherin, etherin, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the second carbon layer may be included in an amount of 1 part by weight to 5 parts by weight, specifically 1.5 parts by weight to 3 parts by weight, and more specifically 2 parts by weight to 3 parts by weight, based on total 100 parts by weight of the negative electrode active material. When the above range is satisfied, it is possible to prevent a decrease in the capacity and efficiency of the negative electrode active material and effectively passivate the negative electrode active material.

In an exemplary embodiment of the present invention, the second carbon layer may have a thickness of 1 nm to 500 nm, specifically 5 nm to 300 nm. When the above range is satisfied, the conductivity of the negative electrode active material is improved, the volume change of the negative electrode active material is readily suppressed, and side reactions between an electrolyte solution and the negative electrode active material are suppressed, so that there is an effect that the initial efficiency and/or service life of a battery is/are improved.

The second carbon layer may be formed under a temperature condition of less than 800°C by a chemical vapor deposition (CVD) method using at least one hydrocarbon gas selected from the group including methane, ethane, propane and acetylene.

In the present invention, the Raman spectroscopy is a method of analyzing the structure of the carbon layer, and in the Raman spectrum of the carbon layer, a peak present in the region near the wave number of 1,580 cm$^{-1}$ is called the G band, and is a peak indicating sp2 bonding of the carbon layer, indicating carbon crystals having no structural defects. Meanwhile, in the Raman spectrum, a peak present in the region near the wave number of 1,360 cm$^{-1}$ is called the D band, and is a peak indicating the sp3 bonding of the carbon layer, and when the atomic bond consisting of sp2 bonds breaks and becomes sp3 bond, the D band increases. Such a D-band increases when a disorder or defect present in the carbon layer is produced. The G band of the Raman spectrum for the carbon layer may be a peak present in the region of the wave number of 1,550 cm$^{-1}$ to 1,620 cm$^{-1}$, and the D band may be a peak present in the region of the wave number of 1,330 cm$^{-1}$ to 1,370 cm$^{-1}$. The wave number range for the G band and D band corresponds to a range that may be shifted by the laser light source used for a Raman analysis method.

In the present invention, the crystallinity of the carbon layer may be confirmed by calculating the D/G band ratio by the Raman analysis. Specifically, the D/G band ratio may be measured using Renishaw 2000 Raman microscope system and 532 nm laser excitation and using a 100x optical lens under conditions of a low laser power density and an exposure time of 30 seconds to avoid laser thermal effects. After a total of 25 points in a 5 $\mu$m x 5 $\mu$m region are measured and fitting is performed using the Lorentzian function to reduce positional deviation, the D/G band ratio may be calculated by calculating the average value of the D band and the G band.

In an exemplary embodiment of the present invention, when the negative electrode active material is analyzed by Raman spectroscopy, the ratio of D band peak intensity to G band peak intensity (D/G band ratio) may be 1.0 or more. Specifically, the D/G band ratio may be 1.01 or more. The upper limit of the D/G band ratio may be 3 or less, 2.5 or less, 2 or less, 1.5 or less, 1.3 or less, or 1.2 or less.

When the D/G band ratio satisfies 1.0 or more, the degree of amorphization of the entire carbon included in the first carbon layer and the second carbon layer included in the negative electrode active material is enhanced. That is, since the carbon layer included in the negative electrode active material may effectively cover the remaining lithium by-product by including a large amount of amorphous carbon, there is an effect of minimizing the side reaction with moisture. Conversely, when the D/G band ratio is less than 1.0, the degree of amorphization of the entire carbon included in the first carbon layer and the second carbon layer is lowered, so that the crystallinity of the carbon layer is enhanced. As described above, the carbon layer with high crystallinity is formed at a relatively high temperature, and rather, there is a disadvantage in that the size of silicon (Si) crystal grains increases, resulting in deterioration of service life performance.

In an exemplary embodiment of the present invention, the content of the entire carbon layer (first carbon layer and second carbon layer) included in the negative electrode active material may be 2 parts by weight to 10 parts by weight, 2 parts by weight to 9 parts by weight, 2 parts by weight to 8 parts by weight or 3 parts by weight to 8 parts by weight, based on total 100 parts by weight of the negative electrode active material. More specifically, the content of the entire carbon layer may be 4 part by weight to 7 parts by weight. When the above range is satisfied, it is possible to prevent a decrease in the capacity and efficiency of the negative electrode active material.

The lithium compound may be hardly present or may not be present on the surface of the negative electrode active material. By including a carbon layer having two layers as described above, the content of the lithium by-product located on the surface of the negative electrode active material is small or the lithium by-product is not present, so that it is possible to control side reactions due to the lithium by-product during slurry formation and effectively prevent the slurry from becoming basic. Conversely, when only a carbon layer having one layer is formed, the slurry becomes basic during slurry formation due to the lithium by-product on the surface of the negative electrode active material generated during the process of doping with Li after the formation of the carbon layer having one layer, so that there is a problem in that the rheological properties of the slurry are changed, and the lithium by-product reacts with moisture to generate gas.

In an exemplary embodiment of the present invention, when the negative electrode active material is analyzed by X-ray photoelectron spectroscopy (XPS), the (elemental content of C)/(elemental content of Li + elemental content of C) is 0.6 or more.

Specifically, the (elemental content of C)/(elemental content of Li + elemental content of C) may be 0.6 or more, 0.63 or more or 0.65 or more. The upper limit of the (elemental content of C)/(elemental content of Li + elemental content of C) may be 1 or less, 0.95 or less, 0.9 or less, 0.85 or less, 0.8 or less, 0.75 or less or 0.73 or less.

When the relationship of the elemental content (atomic%) of the C and Li satisfies the above range, the content of the lithium by-product located on the surface of the negative electrode active material is remarkably small or the lithium by-product is not present, so that it is possible to control side reactions due to the lithium compound during slurry formation and effectively prevent the slurry from becoming basic. Conversely, when the (elemental content of C)/(elemental content of Li + elemental content of C) is less than 0.6, the amount of the lithium by-product present on the surface of the negative electrode active material is large, so that since the slurry becomes basic during slurry formation, there is a problem in that the rheological properties of the slurry are changed, and the lithium by-product reacts with moisture to generate gas.

The relationship between the elemental contents of C and Li can be confirmed by analyzing the negative electrode active material by X-ray photoelectron spectroscopy (XPS). Specifically, the relationship can be confirmed through an XPS (Nexsa ESCA System, Thermo Fisher Scientific (NEXSA 1)) depth profile, and the depth profile may be performed up to 3000 seconds using monatomic Ar (low current), and then the (elemental content of C)/(elemental content of Li + elemental content of C) may be calculated using the elemental content (atomic%) at 10 seconds of the depth profile.

In an exemplary embodiment of the present invention, the total content of Li included in the negative electrode active material may be 0.1 parts by weight to 10 parts by weight, 1 part by weight to 10 parts by weight, 5 parts by weight to 10 parts by weight or 6 parts by weight to 9 parts by weight, based on total 100 parts by weight of the negative electrode active material. The total content may be specifically 6 parts by weight to 8 parts by weight, more specifically 7 parts by weight to 8 parts by weight. There is a problem in that as the content of Li is increased, the initial efficiency is increased, but the discharge capacity is decreased, so that when the content satisfies the above range, appropriate discharge capacity and initial efficiency may be implemented.

The negative electrode active material may have a BET specific surface area of 1 m$^2$/g to 10 m$^2$/g, specifically 1 m$^2$/g to 5 m$^2$/g. When the above range is satisfied, side reactions between an electrolyte solution and the negative electrode active material during the charging and discharging of a battery may be reduced, so that the service life characteristics of the battery may be improved.

The negative electrode active material may have an average particle diameter (D$_{50}$) of 0.1 μm to 30 μm, specifically 1 μm to 20 μm, and more specifically 1 μm to 15 μm. When the above range is satisfied, the active material during charging and discharging is ensured to be structurally stable, and it is possible to prevent a problem in that the volume expansion/contraction level also becomes large as the particle diameter is excessively increased, and to prevent a problem in that the initial efficiency is reduced because the particle diameter is excessively small.

<Preparation method of negative electrode active material>

An exemplary embodiment of the present invention provides a method for preparing the negative electrode active material, the method including: forming silicon-based particles including $SiO_x$ (0<x<2) and Li and having a first carbon layer provided on at least a portion of the surface thereof; and forming a second carbon layer on at least a portion of the silicon-based particle.

The silicon-based particles provided with the first carbon layer may be formed through forming preliminary particles by heating and vaporizing a mixed powder of a Si powder and a $SiO_2$ powder, and then depositing the vaporized mixed gas; forming a first carbon layer on the preliminary particles; and mixing the preliminary particles on which the first carbon layer is formed with a Li powder, and then heat-treating the resulting mixture.

Specifically, the mixed powder of the Si powder and the $SiO_2$ powder may be heat-treated at 1,400°C to 1,800°C or 1,400°C to 1,600°C under vacuum.

The first carbon layer may be formed using a chemical vapor deposition (CVD) method using a hydrocarbon gas or by a method of carbonizing a material which is a carbon source.

Specifically, the first carbon layer may be formed by introducing the formed preliminary particles into a reaction furnace, and then subjecting a hydrocarbon gas to chemical vapor deposition (CVD) at 600 to 1,200°C. The hydrocarbon gas may be at least one hydrocarbon gas selected from the group including methane, ethane, propane and acetylene, and may be heat-treated at 900°C to 1,000°C.

The mixing of the preliminary particles on which the first carbon layer is formed with the Li powder, and then heat-treating of the resulting mixture may be performed at 700°C to 900°C for 4 hours to 6 hours, and specifically at 800°C for 5 hours.

The silicon-based particles may include the above-described Li silicates.

The particle size of the particles may be adjusted by a method such as a ball mill, a jet mill, or an air current classification, and the method is not limited thereto.

A lithium compound is provided on at least a portion of the surface of the silicon-based particles provided with the first carbon layer as described above. Specifically, in the process of preparing the above-described silicon-based particles by forming the preliminary particles including $SiO_x$ (0<x<2), forming a first carbon layer on the preliminary particles, and then doping the preliminary particles with Li, a lithium compound, that is, a lithium by-product formed by unreacted lithium remains near the surface of the silicon-based particles.

In order to suppress a side reaction due to the unreacted lithium compound, forming a second layer on at least a portion of the silicon-based particle may be performed.

The second carbon layer provided on at least a portion of the silicon-based particle may be formed using a chemical vapor deposition (CVD) method using a hydrocarbon gas or by a method of carbonizing a material which is a carbon source.

Specifically, the second carbon layer may be formed by introducing the formed preliminary particles into a reaction furnace, and then subjecting a hydrocarbon gas to chemical vapor deposition (CVD) at less than 800°C. The hydrocarbon gas may be at least one hydrocarbon gas selected from the group including methane, ethane, propane and acetylene, and may be heat-treated at 600°C to less than 800°C. For example, the forming of the second carbon layer on at least a portion of the silicon-based particles may be performed under heat-treatment conditions of 700°C and 4 hours in an acetylene or propane gas atmosphere.

By performing a heat treatment at less than 800°C as described above to enhance the degree of amorphization of the carbon layer, the second carbon layer may be formed. Since the remaining lithium by-product may be effectively covered by enhancing the degree of amorphization of the carbon layer, there is an effect of minimizing the side reaction with moisture and there is an effect that the rapid charging performance is improved Conversely, when the degree of amorphization of the carbon layer is low, that is, the degree of crystallization is high, the size of Si crystal grains is increased because carbon coating is performed at a relatively high temperature, so that there is a disadvantage in that the service life performance deteriorates.

When the negative electrode active material prepared as described above is analyzed by Raman spectroscopy, the ratio of D band peak intensity to G band peak intensity (D/G band ratio) may be 1.0 or more.

**<Negative electrode>**

The negative electrode according to an exemplary embodiment of the present invention may include the above-described negative electrode active material.

Specifically, the negative electrode may include a negative electrode current collector and a negative electrode active material layer disposed on the negative electrode current collector. The negative electrode active material layer may include the negative electrode active material. Furthermore, the negative electrode active material layer may further include a binder and/or a conductive material.

The negative electrode active material layer may be formed by applying a negative electrode slurry including a negative electrode active material, a binder and/or a conductive material to at least one surface of a current collector and drying and rolling the current collector.

The negative electrode slurry includes the negative electrode active material, the binder and/or the conductive material.

The negative electrode slurry may further include an additional negative electrode active material.

As the additional negative electrode active material, a compound capable of reversible intercalation and deintercalation of lithium may be used. Specific examples thereof include a carbonaceous material such as artificial graphite, natural graphite, graphized carbon fiber, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be undoped and doped with lithium such as $SiO_\beta$ ($0 < \beta < 2$), $SnO_2$, vanadium oxide, lithium titanium oxide, and lithium vanadium oxide; or a composite including the metallic compound and the carbonaceous material such as a Si-C composite or a Sn-C composite, and the like, and any one thereof or a mixture of two or more thereof may be used. Furthermore, a metallic lithium thin film may be used as the negative electrode active material. Alternatively, both low crystalline carbon and high crystalline carbon, and the like may be used as the carbon material. Typical examples of the low crystalline carbon include soft carbon and hard carbon, and typical examples of the high crystalline carbon include irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes.

The additional negative electrode active material may be a carbon-based negative electrode active material.

In an exemplary embodiment of the present invention, a weight ratio of the negative electrode active material and the additional negative electrode active material included in the negative electrode slurry may be 10:90 to 90:10, specifically 10:90 to 50:50.

The negative electrode current collector is sufficient as long as the negative electrode current collector has conductivity without causing a chemical change to the battery, and is not particularly limited. For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 6 $\mu$m to 20 $\mu$m, the thickness of the current collector is not limited thereto.

The binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a fluorocarbon powder; a metal powder such as an aluminum powder, and a nickel powder; a conductive whisker such as zinc oxide and potassium titanate; a conductive metal oxide such as titanium oxide; a conductive material such as polyphenylene derivatives, and the like.

The negative electrode slurry may include a thickener. The thickener may be carboxymethyl cellulose (CMC) and is not limited thereto, and a thickener used in the art may be appropriately employed.

The negative electrode slurry may include a solvent for forming a negative electrode slurry. Specifically, the solvent for forming a negative electrode slurry may include at least one selected from the group consisting of distilled water, ethanol, methanol, and isopropyl alcohol, specifically distilled water in terms of facilitating the dispersion of the components.

**<Secondary battery>**

A secondary battery according to an exemplary embodiment of the present invention may include the above-described negative electrode according to an exemplary embodiment. Specifically, the secondary battery may include a negative electrode, a positive electrode, a separator interposed between the positive electrode and the negative electrode, and an electrolyte, and the negative electrode is the same as the above-described negative electrode. Since the negative electrode has been previously described, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or aluminum or stainless steel whose surface is treated with carbon, nickel, titanium, silver, and the like. Further, the positive electrode current collector may typically have a thickness of 3 to 500 $\mu$m, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least one selected from the group consisting of Co, Mn, Al, Cu, Fe, Mg, B and Ga, and c2 satisfies $0.01 \leq c2 \leq 0.3$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

And, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, ethylene carbonate and propylene carbonate which are cyclic carbonates may be preferably used because they have high permittivity as organic solvents of a high viscosity and thus dissociate a lithium salt well, and when the cyclic carbonate is mixed with a linear carbonate of a low viscosity and low permittivity such as dimethyl carbonate and diethyl carbonate in an appropriate ratio, it is able to prepare an electrolyte having a high electric conductivity, therefore such a combined use is more preferable.

As the metal salt, a lithium salt may be used, the lithium salt is a material which is easily dissolved in the non-aqueous electrolyte solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

According to still another exemplary embodiment of the present invention, provided are a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

Hereinafter, preferred embodiments will be suggested to facilitate understanding of the present invention, but the embodiments are only provided to illustrate the present invention as set out in the appended claims.

### <Examples and Comparative Examples>

### Example 1

After 94 g of a powder in which Si and $SiO_2$ were mixed at a molar ratio of 1 : 1 was mixed in a reaction furnace, the resulting mixture was heated under vacuum at a sublimation temperature of 1,400°C. Thereafter, a mixed gas of the vaporized Si and $SiO_2$ was reacted in a cooling zone in a vacuum state having a cooling temperature of 800°C and condensed into a solid phase. Silicon-based particles having a size of 6 $\mu$m were prepared by pulverizing the preliminary silicon-based negative electrode active material using a ball mill for 3 hours. Thereafter, the silicon-based negative electrode active material was placed in the hot zone of a CVD device while flowing Ar gas to maintain an inert atmosphere, a first carbon layer was formed on the surface of the silicon-based negative electrode active material by blowing the methane into the hot zone at 900°C using Ar as a carrier gas to react the methane under $10^{-1}$ torr for 5 hours, and then 6 g of a Li metal powder was added thereto, and an additional heat treatment was performed at a temperature of 800°C in an inert atmosphere to prepare silicon-based particles.

The silicon-based particles are placed in a reactor, and the acetylene is blown into the hot zone of 700°C using Ar as a carrier gas to react at $10^{-1}$ torr for 3 hours to prepare a negative electrode active material in which a second carbon layer was formed on the surface of the silicon-based particle.

### Example 2

A negative electrode active material was prepared in the same manner as in Example 1, except that the reaction was performed for 3 hours when the first carbon layer was formed.

### Example 3

A negative electrode active material was prepared in the same manner as in Example 1, except that the reaction was performed for 4 hours when the first carbon layer was formed, and the reaction was performed for 4 hours when the second carbon layer was formed.

### Example 4

A negative electrode active material was prepared in the same manner as in Example 1, except that the reaction was performed for 4 hours when the second carbon layer was formed.

### Comparative Example 1

A negative electrode active material was prepared in the same manner as in Example 1, except that the second carbon layer was not formed.

### Comparative Example 2

A negative electrode active material was prepared in the same manner as in Example 1, except that the temperature at which the second carbon layer was formed was 900°C, and the reaction was performed for 3 hours.

### Comparative Example 3

A negative electrode active material was prepared in the same manner as in Example 1, except that the silicon-based particles were washed with acid using 0.1 M HCl without forming the second carbon layer.

The constitutions of the negative electrode active materials in Examples 1 to 4 and Comparative Examples 1 to 3 were measured as described below, and are shown in the following Table 1.

[Table 1]

| | Based on total 100 parts by weight of negative electrode active material | | | | $D_{50}$ (μm) of negative electrode active material | Specific surface area ($m^2/g$) of negative electrode active material | D/G band ratio | C/(Li +C) *100 (%) |
|---|---|---|---|---|---|---|---|---|
| | Part by weight of first carbon layer | Part by weight of second carbon layer | Part by weight of entire carbon layer | Total part by weight of Li included in negative electrode active material | | | | |
| Example 1 | 4 | 2 | 6 | 7.8 | 6.5 | 1.7 | 1.09 | 65.4 |
| Example 2 | 2 | 2 | 4 | 7.7 | 6.5 | 1.7 | 1.13 | 66.8 |
| Example 3 | 3 | 3 | 6 | 7.7 | 6.5 | 1.8 | 1.05 | 72.5 |
| Example 4 | 4 | 3 | 7 | 7.5 | 6.5 | 1.9 | 1.01 | 70.9 |
| Comparative Example 1 | 4 | - | 4 | 7.9 | 6.5 | 1.6 | 0.81 | 50.4 |
| Comparative Example 2 | 4 | 3 | 7 | 7.7 | 6.5 | 1.5 | 0.91 | 72.3 |
| Comparative Example 3 | 4 | - | 4 | 5.5 | 6.5 | 1.1 | 0.81 | 55.2 |

<Measurement of content of carbon layer>

The contents of the first carbon layer and the second carbon layer were analyzed using a CS-analyzer (CS-800, Eltra), and the content of the second carbon layer was confirmed by calculating "the content of the entire carbon layer - the content of the first carbon layer".

<Measurement of $D_{50}$ of negative electrode active material>

The average particle diameter ($D_{50}$) of the negative electrode active material particles was measured by the Microtrac laser scattering method.

<Measurement of BET specific surface area of negative electrode active material>

The BET specific surface area of the negative electrode active material was measured by degassing gas at 200°C for 8 hours using a BET measuring apparatus (BEL-SORP-MAX, Nippon Bell), and performing $N_2$ adsorption/desorption at 77 K.

<Measurement of content of Li included in negative electrode active material>

The content of the Li atom included in the negative electrode active material was confirmed by an ICP analysis using an inductively coupled plasma atomic emission spectrometer (ICP-OES, AVIO 500 from Perkin-Elmer 7300).

<Measurement of D/G band ratio according to Raman analysis>

The crystallinity of the entire carbon layer included in the negative electrode active material was confirmed by calculating the D/G band ratio according to Raman analysis.

Specifically, the D/G band ratio was measured using Renishaw 2000 Raman microscope system and 532 nm laser excitation, and was measured using a 100x optical lens under conditions of a low laser power density and an exposure time of 30 seconds to avoid laser thermal effects. After a total of 25 points in a 5 $\mu$m x 5 $\mu$m region were measured and fitting was performed using the Lorentzian function to reduce positional deviation, the D/G band ratio was calculated by calculating the average value of the D band and the G band.

<Relationship between C and Li by X-ray photoelectron spectroscopy (XPS)>

The C/Li ratio of the negative electrode active material was confirmed through an XPS (Nexsa ESCA System, Thermo Fisher Scientific (NEXSA 1)) depth profile. Specifically, the depth profile was performed up to 3000 seconds using monatomic Ar (low current), and the (elemental content of C)/(elemental content of Li + elemental content of C) was calculated using the elemental content (atomic%) at 10 seconds of the depth profile.

Measurement and data processing conditions are as follows.

- X-ray source: Monochromated Al K $\alpha$ (1486.6 eV)
- X-ray spot size: 400 $\mu$m
- Sputtering gun: Monatomic Ar (energy: 1000 eV, current: low, raster width: 2 mm)
- Etching rate: 0.09 nm/s for $Ta_2O_5$
- Operation Mode: CAE (Constant Analyzer Energy) mode
- Survey scan: pass energy 200 eV, energy step 1 eV
- Narrow scan: scanned mode, pass energy 50 eV, energy step 0.1 eV
- Charge compensation: flood gun off
- SF: Al THERMO1
- ECF: TPP-2M
- BG subtraction: Shirley

**<Experimental Example: Evaluation of discharge capacity, initial efficiency, and service life (capacity retention rate) characteristics>**

Negative electrodes and batteries were prepared using the negative electrode active materials in the Examples and the Comparative Examples, respectively.

**Manufacture of negative electrode**

A mixture of the negative electrode active material prepared in Example 1 and graphite (average particle diameter (D50): 20 $\mu$m) as the carbon-based active material mixed at a weight ratio of 15:85 was used as a negative electrode material.

The negative electrode material, styrene-butadiene rubber (SBR) as a binder, Super C65 as a conductive material, and carboxymethyl cellulose (CMC) as a thickener were mixed at a weight ratio of 96:2:1:1, and the resulting mixture was added to distilled water as a solvent for forming a negative electrode slurry to prepare a negative electrode slurry.

One surface of a copper current collector (thickness: 15 $\mu$m) as a negative electrode current collector was coated with the negative electrode slurry in a loading amount of 3.6 mAh/cm$^2$, and the copper current collector was roll-pressed and dried in a vacuum oven at 130°C for 10 hours to form a negative electrode active material layer (thickness: 50 $\mu$m), thereby manufacturing a negative electrode (thickness of the negative electrode: 65 $\mu$m).

Furthermore, the negative electrodes of Examples 2 to 4 and Comparative Examples 1 to 3 were manufactured in the same manner as in Example 1, except that the negative electrode active materials of Examples 2 to 4 and Comparative Examples 1 to 3 were used, respectively, instead of the negative electrode active material of Example 1.

**Manufacture of secondary battery**

A lithium metal foil was prepared as a positive electrode.

Coin-type half cells were manufactured, respectively, by interposing a porous polyethylene separator between the negative electrodes of Examples 1 to 4 and Comparative Examples 1 to 3 manufactured above and the positive electrode and injecting an electrolyte solution thereinto.

As the electrolyte solution, a product obtained by dissolving 0.5 wt% of vinylene carbonate (VC) in a solution of ethyl methyl carbonate (EMC) and ethylene carbonate (EC) mixed at a volume ratio of 7:3, and dissolving $LiPF_6$ at a concentration of 1 M was used.

### Evaluation of discharge capacity, initial efficiency and capacity retention rate

The discharge capacities, initial efficiencies and cycle capacity retention rates of the secondary batteries manufactured in Examples 1 to 4 and Comparative Examples 1 to 3 were evaluated using an electrochemical charger/discharger.

The cycle capacity retention rate was evaluated at a temperature of 25°C, the first and second cycles were charged and discharged at 0.1 C, and the third and subsequent cycles were charged and discharged at 0.5 C (charging conditions: CC/CV, 5 mV/0.005 C cut-off, discharging conditions: CC, 1.5 V cut off).

The discharge capacity (mAh/g) and initial efficiency (%) were derived from the results during 1st charge/-discharge.

The capacity retention rate was calculated as follows.

Capacity retention rate (%) = {(Discharge capacity in the Nth cycle)/(Discharge capacity in the 1st cycle)} X 100 (In the equation, N is an integer of 1 or higher.)

The 50th cycle capacity retention rate (%) is shown in the following Table 2.

[Table 2]

| Battery | Discharge capacity (mAh/g) | Initial efficiency (%) | Capacity retention rate (%) |
|---|---|---|---|
| Example 1 | 509 | 91.8 | 93.6 |
| Example 2 | 509 | 92 | 93.5 |
| Example 3 | 509 | 91.8 | 93.8 |
| Example 4 | 508 | 91.8 | 94.5 |
| Comparative Example 1 | 509 | 90.5 | 80.1 |
| Comparative Example 2 | 508 | 91.5 | 72.5 |
| Comparative Example 3 | 509 | 88.6 | 72.6 |

The negative electrode active material according to the present invention is characterized by including a first carbon layer and a second carbon layer, and the second carbon layer effectively covers the lithium by-product, so that since the lithium by-product is not present on the surface of the negative electrode active material, it is possible to prevent the physical properties of the slurry from being degraded resulting from reaction of the lithium by-product with moisture. In addition, by increasing the degree of amorphization of the carbon layer, it is possible to effectively cover the remaining lithium by-product, and there is an effect of improving the stability of the electrode state and/or the charge/discharge capacity by effectively controlling the size of the Si crystal grains.

In Table 2, in Examples 1 to 4, the (elemental content of C)/(elemental content of Li + elemental content of C) is 60% or more, the lithium by-product is present on the surface of the negative electrode active material in an amount smaller than in the Comparative Examples, the D/G band ratio is 1.0 or more, and the degree of amorphization of the carbon layer is higher than in the Comparative Examples, so that it can be confirmed that the discharge capacity, initial efficiency and capacity retention rate of the battery are all excellent.

Conversely, Comparative Example 1 did not include the second carbon layer, and the (elemental content of C)/(elemental content of Li + elemental content of C) was low. From this, it can be seen that the content of the lithium by-product present on the surface of the negative electrode active material is high due to the absence of the second carbon layer, and from this, it could be confirmed that the initial efficiency and capacity retention rate deteriorated because a side reaction between the negative electrode active material and moisture in the slurry occurred.

In Comparative Example 2, since the second carbon layer is coated at a relatively high temperature, the degree of crystallization of the carbon layer is high, which can be confirmed from a D/G band ratio of 0.91. Therefore, it could be confirmed that the carbon coating at high temperature increases the size of the Si crystal grains in the negative electrode active material, which makes the service life performance significantly deteriorate.

In Comparative Example 3, after the coating of the first carbon layer, the lithium by-product on the silicon-based particles was washed with acid, and it could be confirmed that the initial efficiency and capacity retention rate deteriorated because Li was eluted from the Li compound (lithium silicate) included in the silicon-based particles in the negative electrode active material during acid washing, thereby disintegrating the surface structure of the negative electrode active material. material.

**Claims**

1. A negative electrode active material comprising: silicon-based particles comprising $SiO_x$, wherein 0<x<2, and Li and having a first carbon layer provided on at least a portion of a surface thereof; and

   a second carbon layer provided on at least a portion of the silicon-based particle,
   wherein a ratio of D band peak intensity to G band peak intensity (D/G band ratio) is 1.0 or more upon analysis by Raman spectroscopy, and
   (elemental content of C)/(elemental content of Li + elemental content of C) is 0.6 or more upon analysis by X-ray photoelectron spectroscopy (XPS), and
   wherein a total content of Li comprised in the negative electrode active material is 5 parts by weight to 10 parts by weight based on total 100 parts by weight of the negative electrode active material.

2. The negative electrode active material of claim 1, wherein the Li is present in a form of a lithium silicate.

3. The negative electrode active material of claim 1, wherein a lithium compound is present between the silicon-based particle and the second carbon layer.

4. The negative electrode active material of claim 3, wherein the lithium compound comprises one or more selected from the group consisting of $Li_2O$, LiOH and $Li_2CO_3$.

5. The negative electrode active material of claim 1, wherein the first carbon layer is comprised in an amount of 1 part by weight to 5 parts by weight based on total 100 parts by weight of the negative electrode active material.

6. The negative electrode active material of claim 3, wherein the lithium compound is comprised in an amount of 0.1 parts by weight to 3 parts by weight based on total 100 parts by weight of the negative electrode active material.

7. The negative electrode active material of claim 1, wherein the second carbon layer is comprised in an amount of 1 part by weight to 5 parts by weight based on total 100 parts by weight of the negative electrode active material.

8. The negative electrode active material of claim 1, wherein a content of the entire carbon layer (the first carbon layer and the second carbon layer) comprised in the negative electrode active material is 2 parts by weight to 10 parts by weight based on total 100 parts by weight of the negative electrode active material.

9. A method for preparing the negative electrode active material according to any one of claims 1 to 8, the method comprising: forming silicon-based particles comprising $SiO_x$, wherein 0<x<2, and Li and having a first carbon layer provided on at least a portion of a surface thereof; and forming a second carbon layer on at least a portion of the silicon-based particle.

10. A negative electrode comprising the negative electrode active material according to any one of claims 1 to 8.

11. A secondary battery comprising the negative electrode according to claim 10.

**Patentansprüche**

1. Aktivmaterial für eine negative Elektrode, umfassend: auf Silicium basierende Teilchen, die $SiO_x$, worin 0<x<2, und Li umfassen, und eine erste Kohlenstoffschicht auf mindestens einem Bereich einer Oberfläche davon bereitgestellt aufweisen; und

   eine zweite Kohlenstoffschicht, die auf mindestens einem Bereich des auf Silicium basierenden Teilchens bereitgestellt ist,

worin das Verhältnis der Peakintensität des D-Bandes zur Peakintensität des G-Bandes (D/G-Bandverhältnis) bei Analyse mittels Raman-Spektroskopie 1,0 oder mehr beträgt und

(Elementargehalt von C)/(Elementargehalt von Li + Elementargehalt von C) bei Analyse mittels Röntgenphotoelektronenspektroskopie (XPS) 0,6 oder mehr beträgt, und

worin der Gesamtgehalt an Li, der in dem Aktivmaterial für die negative Elektrode umfasst ist, 5 Gewichtsteile bis 10 Gewichtsteile, bezogen auf insgesamt 100 Gewichtsteile des Aktivmaterials für die negative Elektrode, beträgt.

2. Aktivmaterial für eine negative Elektrode gemäß Anspruch 1, worin das Li in Form eines Lithiumsilikats vorhanden ist.

3. Aktivmaterial für eine negative Elektrode gemäß Anspruch 1, worin zwischen den auf Silicium basierenden Teilchen und der zweiten Kohlenstoffschicht eine Lithiumverbindung vorhanden ist.

4. Aktivmaterial für eine negative Elektrode gemäß Anspruch 3, worin die Lithiumverbindung eines oder mehrere umfasst, ausgewählt aus der Gruppe, bestehend aus $Li_2O$, $LiOH$ und $Li_2CO_3$.

5. Aktivmaterial für eine negative Elektrode gemäß Anspruch 1, worin die erste Kohlenstoffschicht in einer Menge von 1 Gewichtsteil bis 5 Gewichtsteile, bezogen auf insgesamt 100 Gewichtsteile des Aktivmaterials für die negative Elektrode, umfasst ist.

6. Aktivmaterial für eine negative Elektrode gemäß Anspruch 3, worin die Lithiumverbindung in einer Menge von 0,1 Gewichtsteile bis 3 Gewichtsteile, bezogen auf insgesamt 100 Gewichtsteile des Aktivmaterials für die negative Elektrode, umfasst ist.

7. Aktivmaterial für eine negative Elektrode gemäß Anspruch 1, worin die zweite Kohlenstoffschicht in einer Menge von 1 Gewichtsteil bis 5 Gewichtsteile, bezogen auf insgesamt 100 Gewichtsteile des Aktivmaterials für die negative Elektrode, umfasst ist.

8. Aktivmaterial für eine negative Elektrode gemäß Anspruch 1, worin ein Gehalt der gesamten Kohlenstoffschicht (der ersten Kohlenstoffschicht und der zweiten Kohlenstoffschicht), die in dem Aktivmaterial für eine negative Elektrode umfasst ist, 2 Gewichtsteile bis 10 Gewichtsteile, bezogen auf insgesamt 100 Gewichtsteile des Aktivmaterials für die negative Elektrode, beträgt.

9. Verfahren zur Herstellung eines Aktivmaterials für eine negative Elektrode gemäß einem der Ansprüche 1 bis 8, das Verfahren umfassend: das Bilden von auf Silicium basierenden Teilchen, die $SiO_x$, worin $0<x<2$, und Li umfassen, und eine erste Kohlenstoffschicht auf mindestens einem Bereich einer Oberfläche davon bereitgestellt aufweisen; und das Bilden einer zweiten Kohlenstoffschicht auf mindestens einem Bereich des auf Silicium basierenden Teilchens.

10. Negative Elektrode, umfassend das Aktivmaterial für eine negative Elektrode gemäß einem der Ansprüche 1 bis 8.

11. Sekundärbatterie, umfassend die negative Elektrode gemäß Anspruch 10.

## Revendications

1. Matériau actif d'électrode négative comprenant :

des particules à base de silicium comprenant du $SiO_x$, dans lequel $0 < x < 2$, et du Li et présentant une première couche de carbone disposée sur au moins une portion de leur surface ; et
une seconde couche de carbone disposée sur au moins une portion de la particule à base de silicium,
dans lequel un rapport de l'intensité de crête de bande D à l'intensité de crête de bande G (rapport de bandes D/G) est 1,0 ou plus lors d'une analyse par spectroscopie Raman, et
(teneur en élément C)/(teneur en élément Li + teneur en élément C) est 0,6 ou plus lors d'une analyse par spectroscopie de photoélectrons X (XPS), et
dans lequel une teneur totale en Li comprise dans le matériau actif d'électrode négative est de 5 parties en poids à 10 parties en poids sur la base de 100 parties en poids au total du matériau actif d'électrode négative.

2. Matériau actif d'électrode négative selon la revendication 1, dans lequel le Li est présent sous forme de silicate de lithium.

3. Matériau actif d'électrode négative selon la revendication 1, dans lequel un composé lithium est présent entre la particule à base de silicium et la seconde couche de carbone.

4. Matériau actif d'électrode négative selon la revendication 3, dans lequel le composé lithium comprend un ou plusieurs éléments sélectionnés dans le groupe consistant en $Li_2O$, LiOH et $Li_2CO_3$-

5. Matériau actif d'électrode négative selon la revendication 1, dans lequel la première couche de carbone est comprise en une quantité de 1 partie en poids à 5 parties en poids sur la base de 100 parties en poids au total du matériau actif d'électrode négative.

6. Matériau actif d'électrode négative selon la revendication 3, dans lequel le composé lithium est compris en une quantité de 0,1 partie en poids à 3 parties en poids sur la base de 100 parties en poids au total du matériau actif d'électrode négative.

7. Matériau actif d'électrode négative selon la revendication 1, dans lequel la seconde couche de carbone est comprise en une quantité de 1 partie en poids à 5 parties en poids sur la base de 100 parties en poids au total du matériau actif d'électrode négative.

8. Matériau actif d'électrode négative selon la revendication 1, dans lequel une teneur de l'ensemble de la couche de carbone (la première couche de carbone et la seconde couche de carbone) comprise dans le matériau actif d'électrode négative est de 2 parties en poids à 10 parties en poids sur la base de 100 parties en poids au total du matériau actif d'électrode négative.

9. Procédé de préparation du matériau actif d'électrode négative selon l'une quelconque des revendications 1 à 8, le procédé comprenant : la formation de particules à base de silicium comprenant du $SiO_x$, dans lequel $0 < x < 2$, et du Li et présentant une première couche de carbone disposée sur au moins une portion de leur surface ; et la formation d'une seconde couche de carbone sur au moins une portion de la particule à base de silicium.

10. Électrode négative comprenant le matériau actif d'électrode négative selon l'une quelconque des revendications 1 à 8.

11. Batterie secondaire comprenant l'électrode négative selon la revendication 10.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100794192
- WO 2020262436 A1
- US 20210359295 A1
- US 20140205907 A1